(19) Europäisches Patentamt
European Patent Office
Office européen des brevets

(11) Publication number: 0 542 489 A2

# (12) EUROPEAN PATENT APPLICATION

(21) Application number: 92310195.0

(22) Date of filing: 06.11.92

(51) Int. Cl.[5]: A01N 43/80, // (A01N43/80, 43:76, 37:46, 33:12)

(30) Priority: 14.11.91 US 792331

(43) Date of publication of application: 19.05.93 Bulletin 93/20

(84) Designated Contracting States: AT BE CH DE DK ES FR GB GR IE IT LI LU NL PT SE

(71) Applicant: ROHM AND HAAS COMPANY
Independence Mall West
Philadelphia Pennsylvania 19105 (US)

(72) Inventor: Chapman, John Steven
1272 Hoffman Road
Ambler, Pennsylvania 19002 (US)

(74) Representative: Smith, Julian Philip Howard et al
Rohm and Haas (UK) Limited, European Operations Patent Dept., Lennig House, 2 Masons Avenue
Croydon CR9 3NB (GB)

## (54) Microbicidal compositions comprising 3-isothiazolones and polycations.

(57) A microbicidal composition comprising
a) at least one 3-isothiazolone of the formula (I)

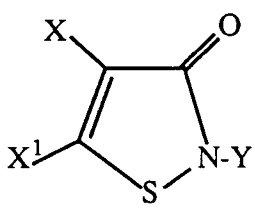

(I)

wherein

Y is selected from the group consisting of hydrogen; alkyl or substituted alkyl of 1 to 18 carbon atoms; unsubstituted or halogen- substituted alkenyl or alkynyl of 2 to 8 carbon atoms; cycloalkyl or substituted cycloalkyl of 3 to 12 carbon atoms; aralkyl or halogen-, lower alkyl-, or lower alkoxy-substituted aralkyl of up to 10 carbon atoms; and aryl, halogen-, lower alkyl-, or lower alkoxy-substituted aryl of up to 10 carbon atoms; and

X and $X^1$ are independently selected from the group consisting of hydrogen, halogen, and $(C_1\text{-}C_4)$alkyl; and

b) and at least one polycation

is disclosed as having an enhanced speed of kill.

EP 0 542 489 A2

This invention concerns microbicidal compositions of 3-isothiazolones and polycations in combination.

Isothiazolones have generated high commercial interest as microbicides to prevent spoilage of certain aqueous and non-aqueous products caused by microorganisms. Isothiazolones are highly effective microbicides (as used herein, "microbicides" includes bactericides, fungicides and algicides, and microbicidal activity is intended to include both the elimination of and the inhibition or prevention of growth of microbial organisms such as bacteria, fungi and algae); by suitable choice of functional groups, they are useful in a broad range of applications. However, although low levels of isothiazolones exhibit rapid biostasis, microbicidal activity is not immediate: isothiazolones have a relatively slow speed of kill (SOK). This can be disadvantageous in areas such as short residence time cooling towers, pulp and paper applications, and oilfield applications.

We have now discovered that the speed of kill of isothiazolones can be significantly increased by the addition of polycations. Accordingly, the present invention provides in one aspect a composition comprising

a) at least one 3-isothiazolone of the formula (I)

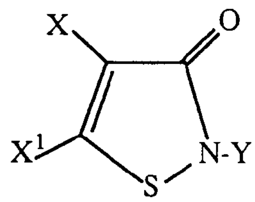

(I)

wherein

Y is hydrogen; alkyl of 1 to 18 carbon atoms, or cycloalkyl of 3 to 12 carbon atoms, each optionally substituted with hydroxy, halo, cyano, alkylamino, dialkylamino, arylamino, carboxy, carbalkoxy, alkoxy, aryloxyalkyl, alkylthio, arylthio, haloalkoxy, cycloalkylamino, carbamoxy or isothiazolonyl; unsubstituted or halogen-substituted alkenyl or alkynyl of 2 to 8 carbon atoms; aralkyl or halogen-, lower alkyl-, or lower alkoxy-substituted aralkyl of up to 10 carbon atoms; or aryl, halogen-, lower alkyl-, or lower alkoxy-substituted aryl of up to 10 carbon atoms; and

X and $X^1$ are independently selected from the group consisting of hydrogen, halogen, and $(C_1$-$C_4)$alkyl or are joined to form a 5-or 6-membered unsaturated ring; and

b) a polycation.

In another aspect, the invention provides a method for inhibiting or preventing the growth of bacteria, fungi, yeast or algae in a locus subject or susceptible to contamination thereby, which comprises incorporating onto or into the locus, in an amount which is effective to adversely affect said growth, the aforementioned composition.

A further aspect of the invention provides compositions containing the combination defined above and an organic solvent, plus optionally an emulsifier and water.

Another aspect of this invention comprises the use of polycations to increase the speed of kill of bacteria, fungi and algae of an isothiazolone microbicide.

The invention is described in more detail with reference to the accompanying figures, in which:

Figures 1 and 2 are graphs showing the effect of polylysine on isothiazolone speed of kill in hand water and in nutrient broth, respectively.

Figures 3 and 4 are similar to Figures 1 and 2 except showing the effect of cationic polyamine.

Figures 5 and 6 are similar to Figures 1 and 3 except in complex media.

Figure 7 is similar to Figure 1 except in minimal media.

Figures 8 and 9 are similar to Figures 3 and 1 except in synthetic cooling tower water.

The 3-isothiazolones of interest include those disclosed in U.S.-A- 3,523,121 and 3,761,488 as represented by the following formula:

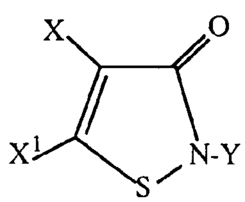

(I)

wherein Y is hydrogen; an alkyl or substituted alkyl of 1 to 18 carbon atoms, preferably from 4 to 10 carbon

atoms; an unsubstituted or halogen substituted alkenyl or alkynyl of 2 to 8 carbon atoms, preferably from 2 to 4 carbon atoms; a cycloalkyl or substituted cycloalkyl of 3 to 12 carbon atoms, preferably from 5 to 8 carbon atoms; an aralkyl or halogen-, lower alkyl-, or lower alkoxy-substituted aralkyl of up to 10 carbon atoms; or an aryl or halogen-, lower alkyl-, or lower alkoxy-substituted aryl of up to 10 carbon atoms; and X and $X^1$ are hydrogen, halogen, or a ($C_1$-$C_4$)alkyl, or may be joined to form a 5 or 6 membered carbocyclic ring.

Representative Y substitutents include methyl, ethyl, propyl, isopropyl, butyl, hexyl, octyl, cyclohexyl, benzyl, 3,4-dichlorophenyl, 4-methoxybenzyl, 4-chlorobenzyl, 4-methoxyphenyl, 4-chlorophenyl, phenethyl, 2-(4-chlorophenyl)ethyl, hydroxymethyl, chloromethyl, chloropropyl, hydrogen, and the like.

Where the expression "lower" is employed in conjunction with terms, such as alkyl, alkoxy, etc., it is intended to indicate that the alkyl or alkyl portion thereof has 1 to 4 carbon atoms, i.e., ($C_1$-$C_4$).

By a substituted alkyl group is meant an alkyl group having one or more of its hydrogen atoms replaced by another substituent group. Examples of the substituted alkyl groups which characterize 3-isothiazolones of this invention include hydroxyalkyl, haloalkyl, cyanoalkyl, alkylaminoalkyl, dialkylaminoalkyl, arylaminoalkyl, carboxyalkyl, carbalkoxyalkyl, alkoxyalkyl, aryloxyalkyl, alkylthioalkyl, arylthioalkyl, haloalkoxyalkyl, cycloalkylaminoalkyl, such as morpholinoalkyl, piperidinoalkyl, pyrrolidonylalkyl, and the like, carbamoxyalkyl, alkenyl, haloalkenyl, alkynyl, haloalkynyl, isothiazolonylalkyl, and the like.

By a substituted aralkyl group is meant an aralkyl group having one or more of the hydrogen atoms on either the aryl ring or the alkyl chain replaced by another substituent group. Examples of the substituent aralkyl groups which characterize 3-isothiaozlones of this invention include halogen-, lower alkyl-, or lower alkoxy-substituted aralkyl groups, and the like.

By a substituted aryl group is meant an aryl group, such as benzene, naphthalene, or pyridine, having one or more of the hydrogen atoms on the aryl ring replaced by another substitutent group. Examples of such substitutent groups include halogen, nitro, lower alkyl, lower alkyl-acylamino, lower carbalkoxy, sulfamyl, and the like.

Particularly preferred isothiazolones are 5-chloro-2-methyl-3-isothiazolone, 2-methyl-3-isothiazolone, 2-n-octyl-3-isothiazolone, 4,5-dichloro-2-cyclohexyl-3-isothiazolone and 4,5-dichloro-2-n-octyl-3-isothiazolone.

Most preferred is 5-chloro-2-methyl-3-isothiazolone, either as a sole compound or in admixture with 2-methyl-3-isothiazolone. When in admixture, the preferred ratio of monochlorinated/unchlorinated isothiazolone is from about 70:30 to about 85:15, and an especially preferred ratio is from about 70:30 to about 80:20. A second especially preferred isothiazolone is 2-methyl-3-isothiazolone in combination with low levels of 5-chloro-2-methyl-3-isothiazolone, a preferred ratio being from about 98:2 to about 96:4, and an especially preferred ratio being about 97:3. A third especially preferred isothiazolone is 2-n-octyl-3-isothiazolone.

By "polycation" is meant any compound having a positive charge at more than one location on the molecule. Usually it will be a polymer having a positive charge on each unit. Preferred are ammonium polycations, where the positive charge is located on the repeating amino unit.

Examples of particularly preferred polycations are polylysine, Floxan SC 5067 (a cationic polyamine), Cat Floc T2 (a liquid cationic polyelectrolyte), Clarifloc C308P (a polydiallyldimethyl ammonium chloride), CA 289 (a low molecular weight amine type cationic polymer), mls 617 polyoxema (an oxazolidine ring with secondary $NH_3$ and OH groups), CA 250 (a low molecular weight amine-type cationic polymer) and Magnifloc 567C (a polyquatenary amine).

Polycations exhibit little or no microbicidal activity when administered to systems at low levels (10-500 ppm). However, when such levels are administered together with isothiazolones - themselves present at levels which alone would produce only limited microbicidal activity - a significant acceleration of speed of kill is observed. This is a particular advantage in many applications where the well-documented microbicidal activity of isothiazolones needs to be complemented with a rapid action; examples are where contact time is limited, or where rapid reductions in viable microbes are required.

The composition may contain from about 0.00001 to about 99 parts of the one or more polycations.

Generally, the composition of the invention will be in the form of a solution. Typical formulation ranges are illustrated in the following Table (all percentages are parts by weight) for both a concentrated solution of the isothiazolone and a dilute solution. For certain uses, such as shipping of large quantities, more concentrated solutions may also be utilized.

FORMULATIONS TABLE

| Isothiazolone (I,Supra) | Polycation | Solvent |
|---|---|---|
| 0.00001-99% | 0.00001-99% | 0-99.99998% |
| | Preferred | |
| 0.00001-5% | 0.00001-5% | 90-99.99998% |
| | Most Preferred | |
| 0.0001-1% | 0.0001-1% | 98-99.9998% |

Solvents may be used to dissolve the isothiazolones and may be any organic solvent which dissolves the isothiazolones, is compatible with the proposed end use, does not destabilize the isothiazolone, and does not react with the polycation.

Hydroxylic solvents, for examples, polyols, such as glycols, alcohols and the like, may be used. Under conditions of high dilution and high ratios of polycation to isothiazolone, glycols may be successfully used. In certain formulations, hydrocarbons, either aliphatic or aromatic, are useful solvents.

Preferred solvents are capped polyols, wherein the free hydroxyl group is replaced with an ether or ester function. Especially preferred are 2,5,8,11-tetraoxadodecane, commonly known as triethylene glycol dimethyl ether, and 4,7-dioxaundecanol-1 acetate, commonly known as diethylene glycol butyl ether acetate.

Water is a solvent for certain of the preferred isothiazolones and the polycations may be employed in aqueous formulations.

The ratio of polycation to isothiazolone employed will vary depending on use conditions; ratios of polycation to isothiazolone may be in the range of from about 1:100 to about 100:1, but more generally are from 1:10 to 10:1 and particularly 1:3 to 3:1.

Uses of these new enhanced SOK microbicides are typically at any locus subject to contamination by bacteria, fungi, yeast or algae. Typical loci are in aqueous systems such as water cooling, laundry rinse water, oil systems such as cutting oils, oil fields and the like where microorganisms need to be killed or where their growth needs to be controlled. However the compositions of the invention may also be used in all applications for which known microbicidal compositions are useful; preferred utilities of the compositions are to protect wood paint, adhesive, glue, paper, textile, leather, plastics, cardboard, lubricants, cosmetics, food, caulking, feed and industrial cooling water from microorganisms.

As already indicated, these compositions have particular utility in environments where rapid speed of kill is required, such as cooling tower systems, pulp/paper applications and oilfields, or heavily fouled systems where a "knock-down" dose is required.

It is known in the art that the performance of microbicides may be enhanced by combination with one or more other microbicides. Thus, other known microbicides may be combined advantageously with the isothiazolone/polycation composition of this invention.

The following examples are intended to illustrate the present invention and not to limit it except as it is limited by the claims. All percentages are by weight unless otherwise specified, and all reagents are of good commercial quality unless otherwise specified.

Two polycations, polylysine and Floxan SC5067 (a cationic polyamine) were tested for their effect on the speed of kill (SOK) of three isothiazolones: 2-methyl-3-isothiazolone, 5-chloro-2-methyl-3-isothiazolone and a 3:1 mixture of 5-chloro-2-methyl-3-isothiazolone and 2-methyl-3-isothiazolone. They were tested initially in the simple primary screen and then in the more sophisticated secondary screen. Results of both screens are given in the Examples below.

EXAMPLE 1 (Primary Screen)

Dilutions of isothiazolone (5-chloro-2-methyl-3-isothiazolone and 2-methyl isothiazolone in a 3:1 ratio) and the compounds to be tested were made in sterile hard water. Graded dilutions of the isothiazolone were dispersed to the wells of a 96 well microtitre plate. Two-fold serial dilutions of the polycation were then added to the wells, yielding a final volume of 100 µl. 5 µl of an overnight culture ($2 \times 10^7$ organisms) of Pseudomonas aeruginosa (ATCC 15442) were inoculated into the wells using a 96 prong replicator. Plates were incubated at 25 °C. Viable cells were recovered at 0, 2, 4, and 24 hrs of inoculating 5 µl from the isothiazolone-polycation mixture into 250 µl trypticase soy broth (TSB) and incubating for 48 hrs. In the absence of any microbicidal

activity, 5 μl of the isothiazolone-polycation mixture would be expected to have approximately $10^5$ cells, and thus the absence of growth in a well indicates at least a five log (i.e. 100,000-fold) reduction in organism viability. Combinations that yielded a 5 log reduction in hard water were retested in nutrient broth.

Both polylysine and Floxan SC5067 were tested. Figures 1 and 2 show in graph form the various combinations of polylysine and the 3:1 isothiazolone mixture which produce a 100,000 fold reduction in activity within 2 hours in buffered hard water and nutrient both respectively: Figures 3 and 4 show the same for Floxan SC5067. Both sets of graphs show clearly that addition of only a few ppm of polycation results in a dramatic reduction in the amount of isothiazolone required to produce the rapid reduction in organism viability.

EXAMPLE 2 (Secondary Screen)

The secondary screen was performed with 2-methyl-3-isothiazolone, 5-chloro-2-methyl-3-isothiazolone and the 3:1 mixture of the two isothiazolones.

Speed of kill measurements were performed as follows: A mid-log phase culture of Pseudomonas aeruginosa (approximately 2 x $10^8$ cfu/ml (colony-forming units/ml)) in M9 (minimal salt and glucose) media or trypticase soy broth (TSB) was exposed to isothiazolone-polycation mixtures. Aliquots of 50 μl were removed at intervals and diluted serially fourfold into 150 μl of TSB supplemented with 0.5 mg/ml sodium thioglycollate. The microtitre plates were sealed and incubated at 37°C for 18-24 hrs. The number of viable cfu/ml were estimated by determining the last well of the dilution series which shows growth.

Figures 5 to 7 show the percentage of survivors measured logarithimically against time, when the active ingredient is isothiazolone alone, polycation alone and a combination of the two.

Figures 5 and 6 show the effect of Floxan and polylysine on the speed of kill of 2-methyl-3-isothiazolone and 5-chloro-2-methyl-3-isothiazolone in trypticase soy broth. The increase in SOK is particularly marked for 5-chloro-2-methyl-3-isothiazolone, where 300 ppm increases the number of organisms killed by 10-100 times in 2 hrs. In M9 (minimal salt and glucose) media (Figure 7), 10 ppm of polylysine causes approximately a 1.5 log increase in killing over 2 hrs for both 2-methyl isothiazolone and 5-chloro-2-methyl-3-isothiazolone. In both the TSB and M9 media, only slight killing by polylysine alone is observed.

EXAMPLE 3

In order to simulate more accurately the conditions to be found in real application environments, SOK tests as in Example 2 were also performed in a synthetic cooling tower (CTW) medium.

The results are shown in Figures 8 and 9. In Figure 8, it can be seen that 25 ppm Floxan SC5067 produces virtually no killing on its own, while 20 ppm of a 3:1 mixture of 5-chloro-2-methyl-3-isothiazolone and 2-methyl-3-isothiazolone kills approximately 90% of the organisms within 2 hours. However, the combination of the two reduces the microbial population by 3 logs, i.e., about a thousand-fold, a hundred times more than the isothiazolone mixture alone. A similar pattern of activity is seen in Figure 9 for polylysine, where the combination produces a dramatic enhancement of the speed of kill.

Although specific embodiments and examples have been described herein, it should be born in mind that these have been provided by way of explanation and illustration and that the present invention is not limited thereby. Modifications which are within the ordinary skill in the art to make are considered to lie within the scope of the invention.

## Claims

1. Composition comprising
   a) one or more isothiazolones of the formula

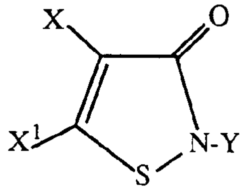

(I)

wherein

Y is hydrogen; alkyl of 1 to 18 carbon atoms, or cycloalkyl of 3 to 12 carbon atoms, each optionally substituted with hydroxy, halo, cyano, alkylamino, dialkylamino, arylamino, carboxy, carbalkoxy, alkoxy, aryloxyalkyl, alkylthio, arylthio, haloalkoxy, cycloalkylamino, carbamoxy or isothiazolonyl; unsubstituted or halogen-substituted alkenyl or alkynyl of 2 to 8 carbon atoms; aralkyl or halogen-, lower alkyl-, or lower alkoxy-substituted aralkyl of up to 10 carbon atoms; or aryl, halogen-, lower alkyl-, or lower alkoxy-substituted aryl of up to 10 carbon atoms; and

X and $X^1$ are each independently hydrogen, halogen or $(C_1-C_4)$alkyl, or may be joined to form a 5 or 6 membered carbocyclic ring;

b) at least one polycation.

2. Composition according to claim 1 wherein the polycation is an ammonium polycation.

3. Composition according to claim 1 or 2 wherein the polycation is a polylysine, a cationic polyamine, a liquid cationic polyelectrolyte, a polydiallyldimethyl ammonium chloride, a low molecular weight amine type cationic polymer, an oxazolidine ring with secondary $NH_3$ and OH groups, a low molecular weight amine-type cationic polymer, or a polyquatenary amine.

4. Composition according to any preceding claim wherein the isothiazolone is 5-chloro-2-methyl-3-isothiazolone or 2-methyl-3-isothiazolone or a 3:1 mixture thereof, or 2-n-octyl-3-isothiazolone, 4,5-dichloro-2-cyclohexyl isothiazolone or 4,5-dichloro-2-n-octyl-3-isothiazolone.

5. Composition according to any preceding claim wherein the ratio of isothiazolone to polycation is from 1:100 to 100:1, preferably from 1:10 to 10:1, and more preferably from 1:3 to 3:1.

6. Microbicidal composition comprising a composition according to any preceding claim and an organic solvent, and optionally also an emulsifier and water.

7. Method of inhibiting or preventing the growth of bacteria, fungi, yeast or algae in a locus subject or susceptible to contamination thereby, which comprises incorporating onto or into the locus, in an amount effective to adversely affect said growth, a composition according to any preceding claim.

8. Method according to claim 7 wherein the locus is cooling tower water.

9. The use of polycations to increase the speed-of-kill of bacteria, fungi or algae effected by an isothiazolone-containing microbicide.

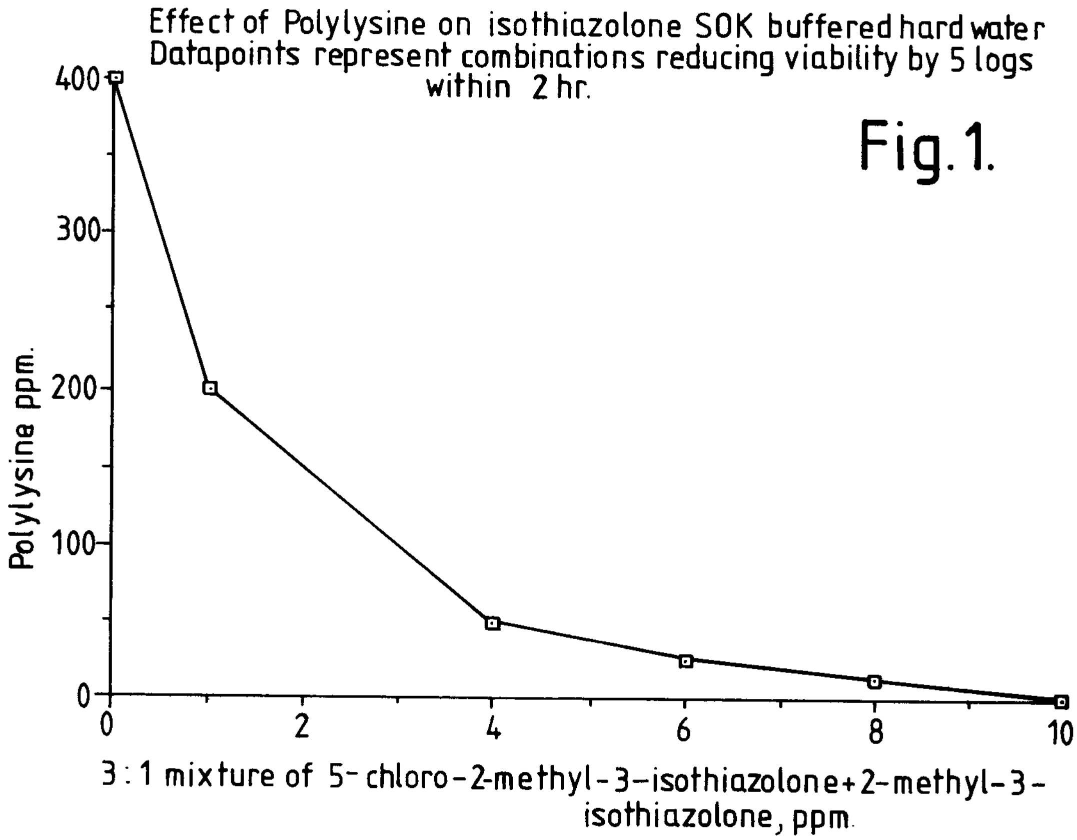
Effect of Polylysine on isothiazolone SOK buffered hard water
Datapoints represent combinations reducing viability by 5 logs within 2 hr.
Polylysine ppm.
400
300
200
100
0
0
2
4
6
8
10
3:1 mixture of 5-chloro-2-methyl-3-isothiazolone+2-methyl-3-isothiazolone, ppm

Fig. 1.

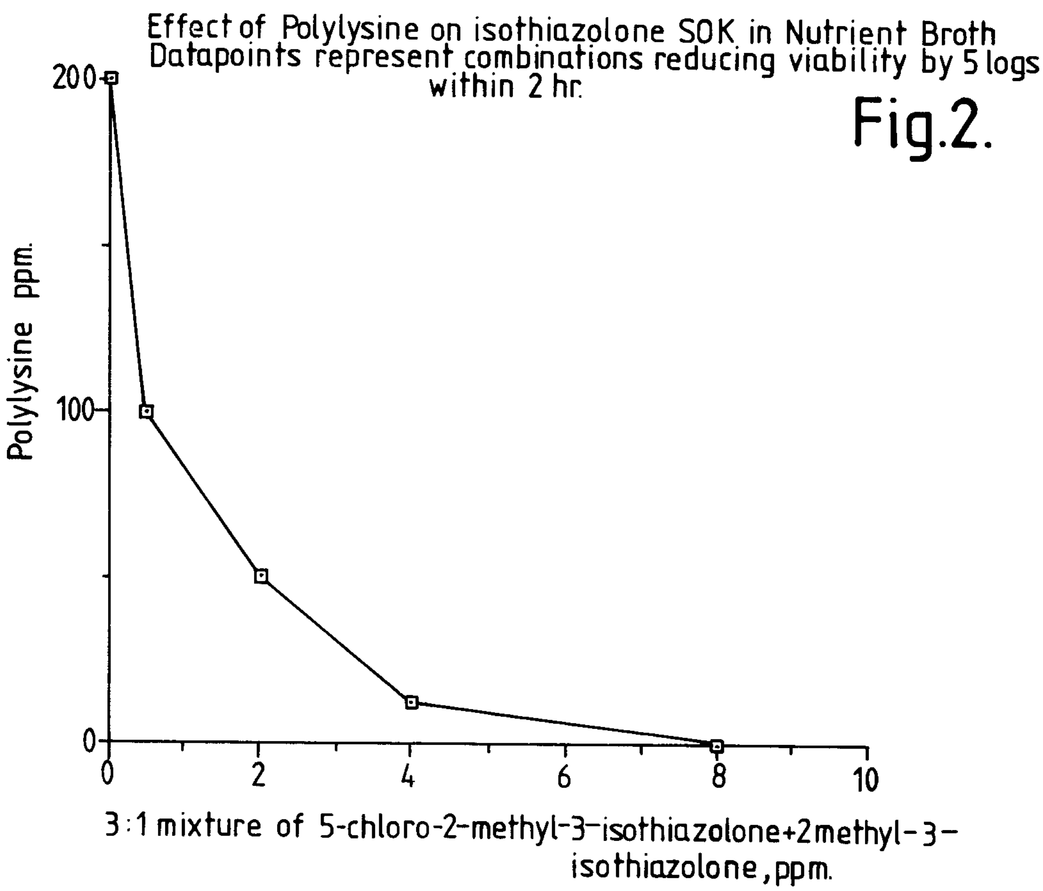
Effect of Polylysine on isothiazolone SOK in Nutrient Broth
Datapoints represent combinations reducing viability by 5 logs within 2 hr.
Polylysine ppm.
200
100
0
0
2
4
6
8
10
3:1 mixture of 5-chloro-2-methyl-3-isothiazolone+2methyl-3-isothiazolone, ppm.

Fig. 2.

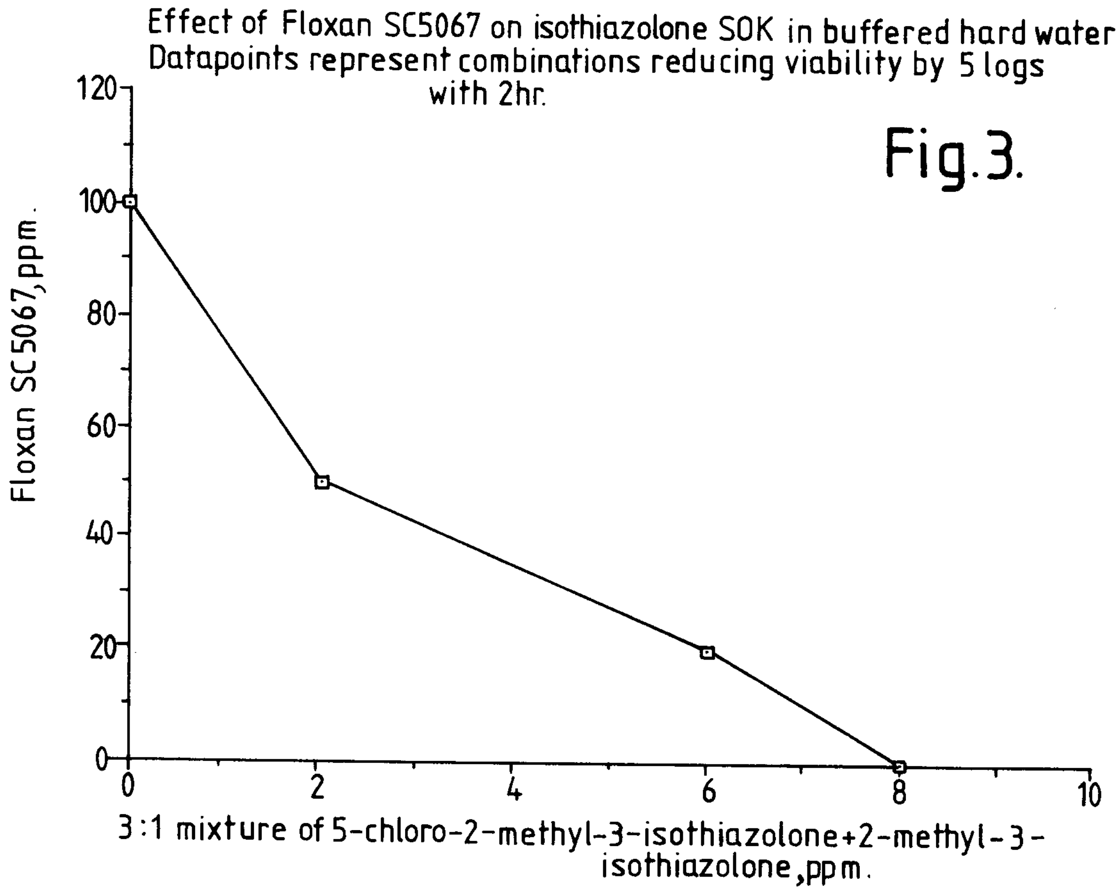
Effect of Floxan SC5067 on isothiazolone SOK in buffered hard water
Datapoints represent combinations reducing viability by 5 logs with 2hr.
Floxan SC5067, ppm.
120
100
80
60
40
20
0
0
2
4
6
8
10
3:1 mixture of 5-chloro-2-methyl-3-isothiazolone+2-methyl-3-isothiazolone, ppm.

Fig.3.

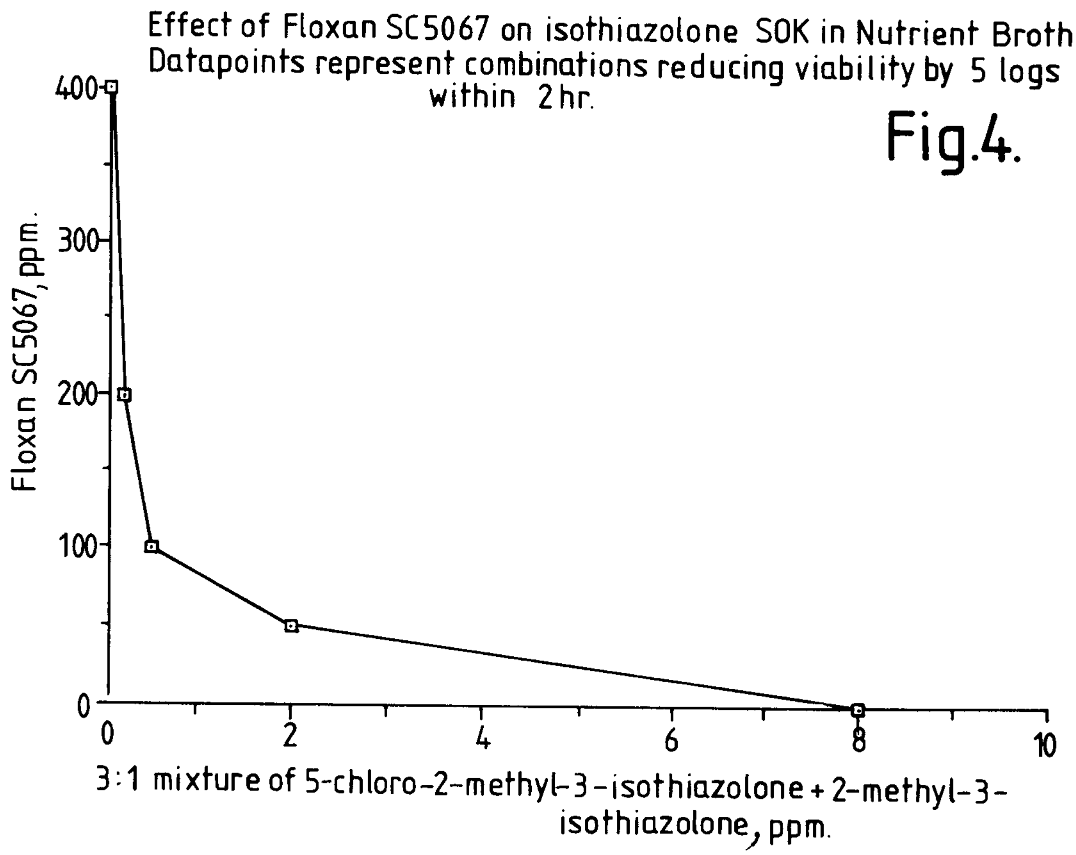
Effect of Floxan SC5067 on isothiazolone SOK in Nutrient Broth
Datapoints represent combinations reducing viability by 5 logs within 2 hr.
Floxan SC5067, ppm.
400
300
200
100
0
0
2
4
6
8
10
3:1 mixture of 5-chloro-2-methyl-3-isothiazolone + 2-methyl-3-isothiazolone, ppm.

Fig.4.

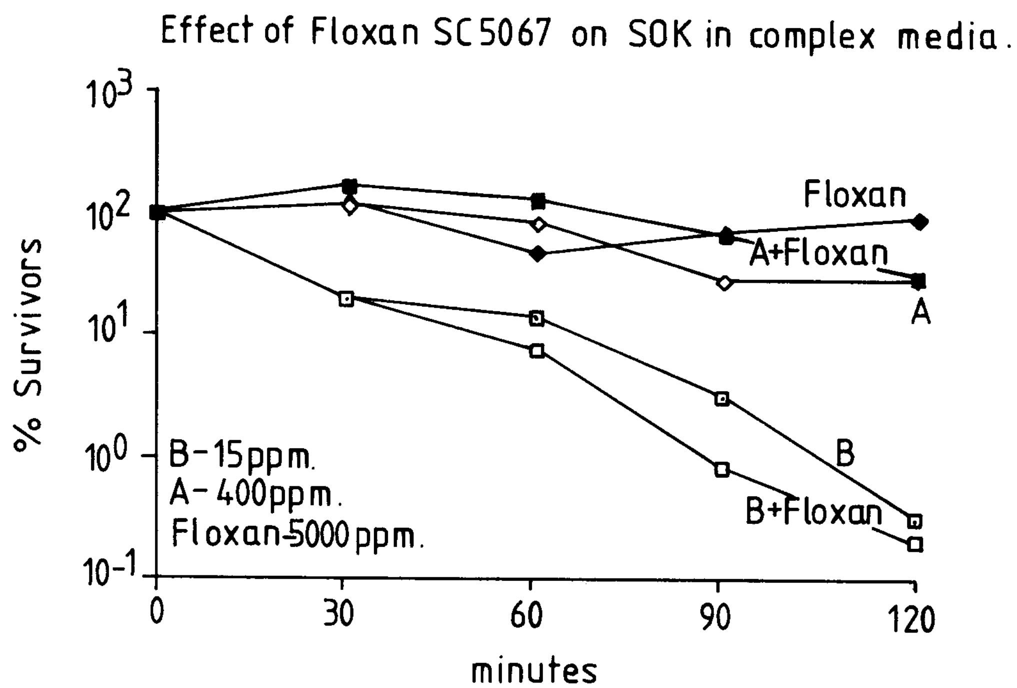


A = 2-methyl-3 - isothiazolone

B = 5 - chloro-2 - methyl-3 - isothiazolone.

Fig.5.

Effect of polylysine on SOK in complex media.

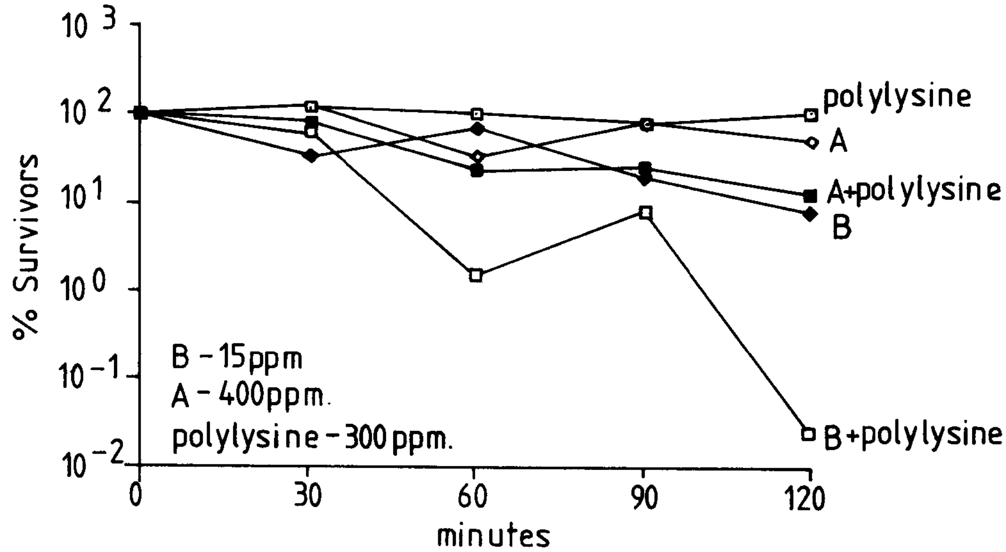


A=2-methyl-3- isothiazolone
B=5-chloro-2-methyl-3-isothiazolone

Fig. 6.

Effect of polylysine on SOK in minimal media

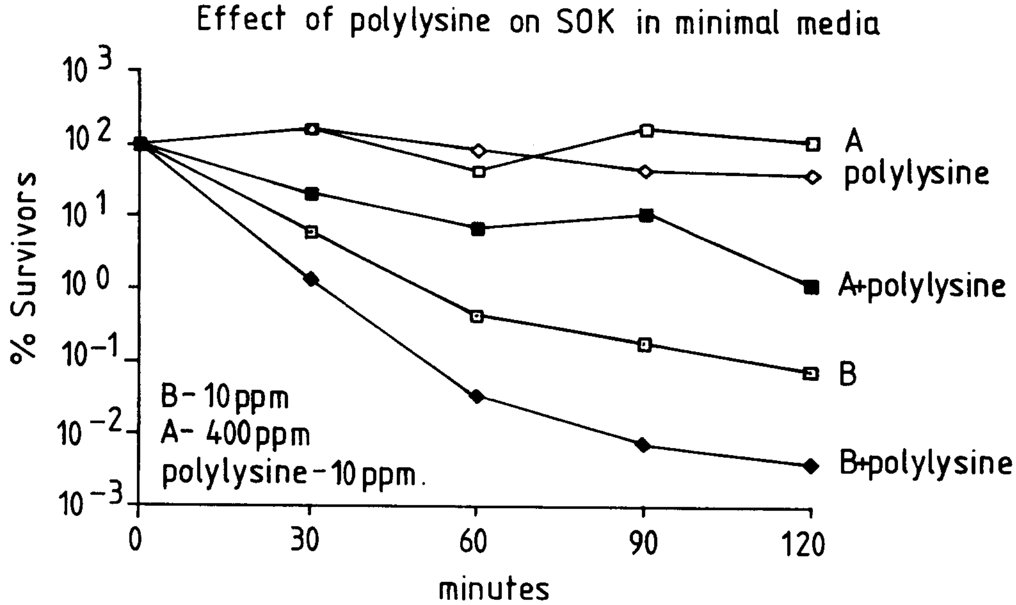


A= 2- methyl-3 - isothiazolone
B=5- chloro-2-methyl-3-isothiazolone

Fig. 7.

Effect of Floxan SC5067 on the SOK of 3:1 mixture of 5-chloro-2-methyl-3-isothiazolone and 2-methyl-3-isothiazolone in synthetic cooling tower water.

Fig. 8.

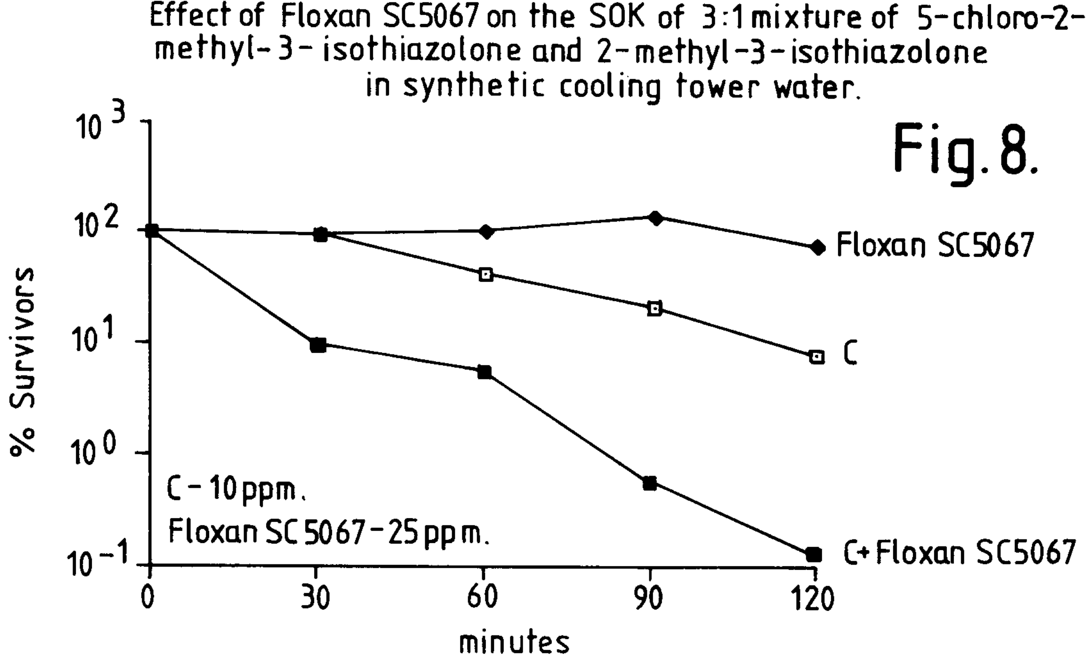


C= 3:1 mixture of 5-chloro-2-methyl-3-isothiazolone and 2-methyl-3-isothiazolone

Effect of polylysine on the SOK of biocide C in synthetic cooling tower water

Fig. 9.

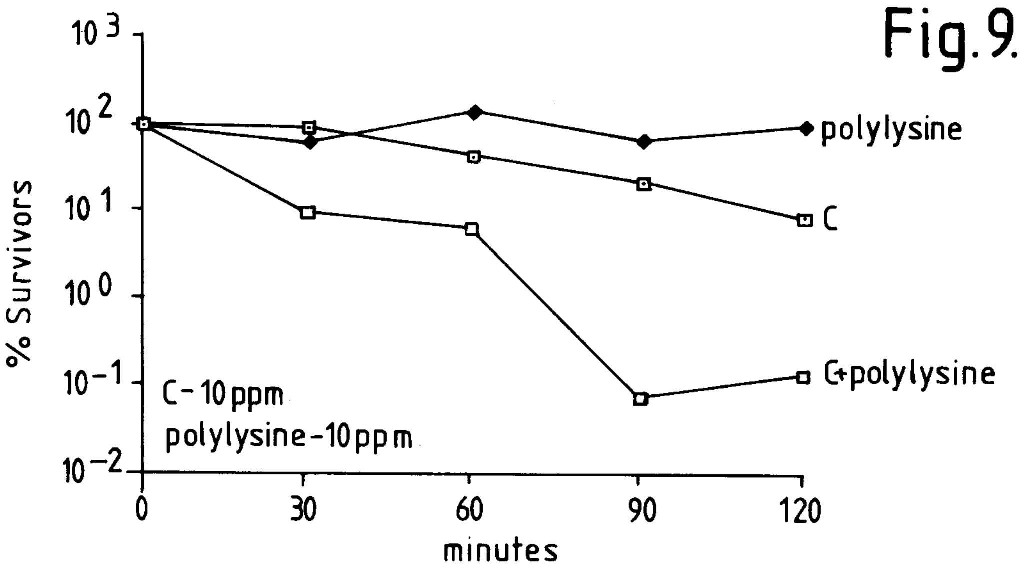


C= 3:1 mixture of 5-chloro-2-methyl-3-isothiazolone and 2 methyl-3-isothiazolone.